# EUROPEAN PATENT SPECIFICATION

(11) **EP 4 029 972 B1**
(45) Date of publication and mention of the grant of the patent: **10.05.2023**
(21) Application number: 22150785.8
(22) Date of filing: 10.01.2022
(51) Int. Cl.: C25C 1/20, C25C 7/02, C25C 7/06

(54) **DEVICE FOR THE RECOVERY OF METALLIC MATERIALS**
VORRICHTUNG ZUR WIEDERGEWINNUNG VON METALLISCHEN MATERIALIEN
DISPOSITIF POUR LA RÉCUPÉRATION DE MATÉRIAUX MÉTALLIQUES

(30) Priority: 13.01.2021 IT 202100000536
(43) Date of publication of application: 20.07.2022
(73) Proprietor: Etruria Tecnology Srl, 52100 Arezzo (AR) (IT)
(72) Inventor: PRIMITIVI, Daniele, 52100 AREZZO (IT)
(74) Representative: Fabbriciani, Simone

(56) References cited:
- WO-A1-2013/147446
- CN-U- 201 560 239
- JP-U- S5 343 004
- US-A- 4 276 147
- US-A1- 2012 181 183

## Description

This invention relates to a device for recovering metallic materials, particularly for recovering precious metals, such as gold, silver, platinum and rhodium, in the goldsmith-silversmith production sector.

In the jewellery, goldsmith and silversmith sector, during the metal processing and the various chemical-physical treatments which the raw material undergoes during its transformation to become pieces of jewellery or jewels, a substantial quantity of precious metal, gold, silver, platinum and rhodium is lost, for example in the form of liquids.

For this reason, the processing is normally performed in box-shaped bodies equipped with means for collecting this metals which is then carried to external companies specialised in the recovery of the hardest precious metals.

Examples of prior art are given by CN 201560239 U, WO 2013/147446 A1, US 2012/0181183 A1, US 4,276,147 and JP S53 43004 U.

The recovery costs which the manufacturer must bear are very high and, above all, serious uncertainties remain regarding the quantity of precious metal contained and recovered from the processing of solid and liquid waste material.

The aim of the invention is to overcome the above-mentioned drawbacks of prior art types of devices for recovering metallic materials which can be used in the same company for making pieces of jewellery.

In the context of the above-mentioned purpose, an aim of the invention is to provide a device for recovering metallic materials which can avoid transferring the processing waste to third parties, in such a way as to save on the recovery costs and to eliminate the problems linked to the uncertainties regarding content.

Another aim of the invention is to allow the step of recovering the precious metals to be inserted in the goldsmith-silversmith production cycle.

Yet another aim of the invention is to provide a device for recovering metallic materials, with means which are available on the market and using materials of common use, in such a way that the device is economically competitive.

This purpose, as well as these and other aims, which are described in more detail below, are achieved by the device for recovering metallic materials according to the invention, comprising the technical features described in one or more of the appended claims. The dependent claims correspond to possible different embodiments of the invention.

In particular, in accordance with a first aspect, the invention relates to a device for recovering metallic materials as defined in claim 1 which comprises a cylindrical body for successive portions of an electrolytic solution. The solution, contained in a tank, is introduced inside the cylindrical body by means of a pump or other feeding means.

The cylindrical body, where the term "cylindrical" means a three-dimensional shape generated by the projections in succession of a straight line along a closed line, is for containment for at least one anode member and at least one cathode sponge. The metal coming from the electrolytic solution is deposited on the cathode sponge so that it can be collected and then melted and transformed for its re-use in the production cycle.

The anode and cathodes are immersed in the electrolytic solution which gradually feeds the inside of the cylindrical body.

Moreover, the cathode sponge is designed to be extracted from the cylindrical body, in such a way as to make the recovery of the metal faster and considerably simplify also the geometry and the use of the device according to the invention which, thanks to this idea, need not be completely removed (and then fixed again to the containment tank) to allow collection of the metal deposited on the anode. Advantageously, in order to improve the efficiency of electrolysis, the cylindrical body has at least one electrolytic unit comprising a cathode sponge interposed, as in a sandwich, between two anodes.

In order to facilitate extraction and insertion of the cathode sponge, the latter is associated with a supporting frame which is positioned in such a way as to be integral with the cylindrical body, but in a removable fashion.

The frame is made of two parts fixable to each other in a removable fashion.

The Applicant has in fact perceived that by taking apart the part which remains further outside the cylindrical body, positioned above the bottom of the tank and to which the cathode sponge is associated, on the innermost side, that is to say, the part destined to be contained substantially entirely inside the cylindrical body, resting for the sponge, it would have been extremely fast and convenient for the user to extract the sponge for recovering the metal.

In the same way, each of the two anode members is also preferably equipped with a supporting element connected to the cylindrical body, in such a way as to improve the use.

In order to support the (mounted) frame for the cathode and the supporting elements for the anodes, the Applicant has advantageously provided the cylindrical body with a lid to be placed on the upper surface of the body (relative to the bottom of the containment tank of the electrolytic solution) for protecting the inside of the body, but also, and above all, for supporting the frame and the supporting elements, thanks, respectively, to an engagement slot for a middle portion of the frame and a housing compartment for each supporting element.

Inside the cylindrical body there are preferably contact means for the lower surfaces of the frame and of the supporting elements.

A second aspect of the invention relates to a system for the recovery of metallic materials which comprises, as well the device just described, also the containment tank for the electrolytic solution, in which the associated device and feed means, connected to the tank, which are able to introduce into the cylindrical body of the device according to the invention, successive portions of the electrolytic solution into which the cylindrical body is - at least partly - submerged.

Lastly, another aspect of the invention relates to a kit for recovering metallic materials which comprises a device for recovering metallic materials made in this way and means for feeding successive portions of an electrolytic solution into a cylindrical body of the device. Advantageously, in order to prevent the acid aggressive action of the electrolytic bath, the cylindrical body is made of inert material.

Further features and advantages of the invention are more apparent in the detailed description below, with reference to a preferred, non-limiting embodiment of the device for recovering metallic materials, illustrated by way of example and without limiting the scope of the invention, with the aid of the accompanying drawings, in which:
Figure 1 is a perspective view of the device 1 for recovering metallic materials;
Figure 2 shows a side view of the device 1 of the previous drawing;
Figure 3 shows the lid 7 of the device 1 of Figure 1;
Figure 4 is a perspective view of the frame 5 and cathode sponge 4;
Figure 5 is a perspective view of a supporting element 6 of the device 1 of

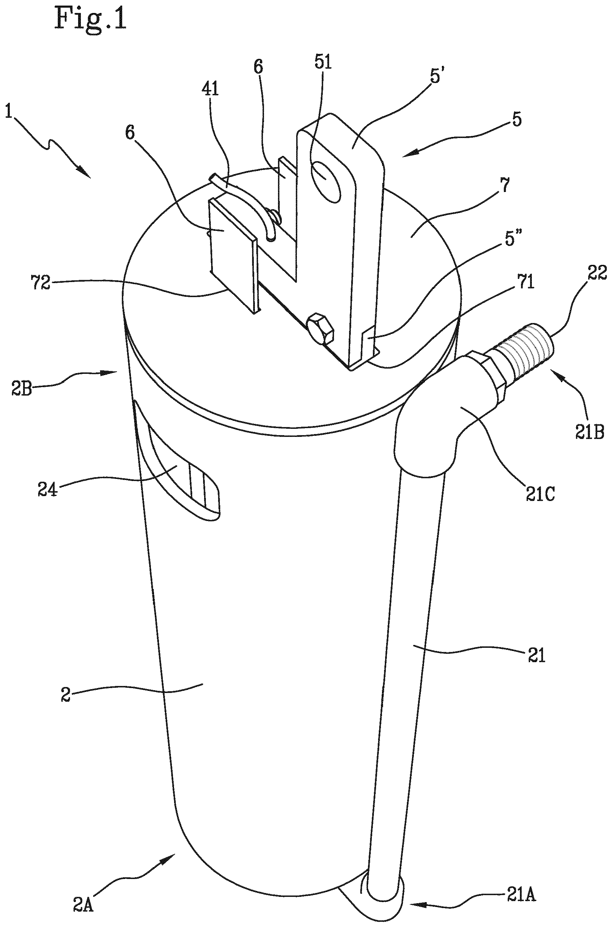

Figure 1 with the respective anode member 3.

The above-mentioned drawings show a preferred embodiment of a device for recovering metallic materials, according to the invention, which is denoted in its entirety with the numeral 1 and which comprises a cylindrical body 2, made of cement or resin, with a circular base, for containing a pair of anodes 3 and for a cathode sponge 4 for collecting the metal deposited. The cathodes 3 and the sponge 4 are at least partly immersed in successive portions of an electrolytic solution introduced into the body by a magnetic drive pump (not illustrated) which draws the liquid from the containment tank (also not illustrated) and pushes it into the body 2.

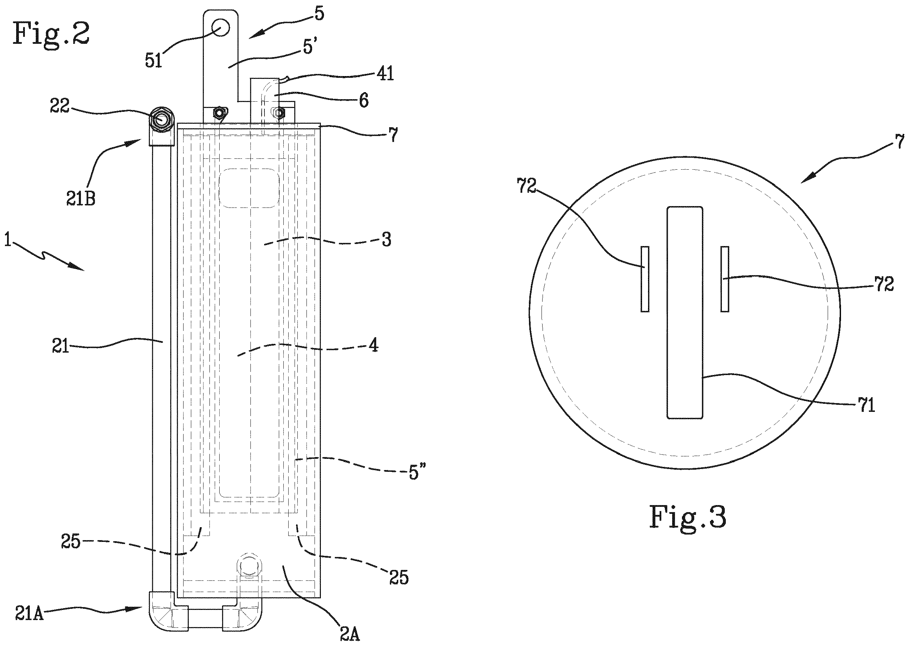

The body 2 has a lid 7 for protecting the internal components (Figure 3).

Here, a current rectifier (not illustrated) allows the metal to be deposited in the cathode sponge 4 by the action of the anodes 3, in such a way as to allow, once the cycle has finished, the extraction of the sponge 4 from the body 2 and the finding of the metal, for its subsequent melting and transformation for re-use in the production cycle.

The electrolytic solution, as said in liquid form, penetrates inside the body 2 by an inlet opening 22 formed at the end 2B of a tubular element 21 in communication with the bottom 2A of the cylindrical body 2. The opening 22 is positioned substantially at the upper end part 2B of the cylindrical body 2 and faces substantially normally to the ground, that is to say, the plane in which the opening 22 lies is vertical relative to the surface of the electrolytic liquid, in such a way as to facilitate the drawing out. This is possible thanks to the fitting of a connector 21C between the opening 22 and the central part of the tubular element 21 (Figure 1).

In order to prevent it overflowing, the excess solution may escape from the body 2 by means of a window 24 defined on the cylindrical body 2 at a predetermined height from the bottom 2A.

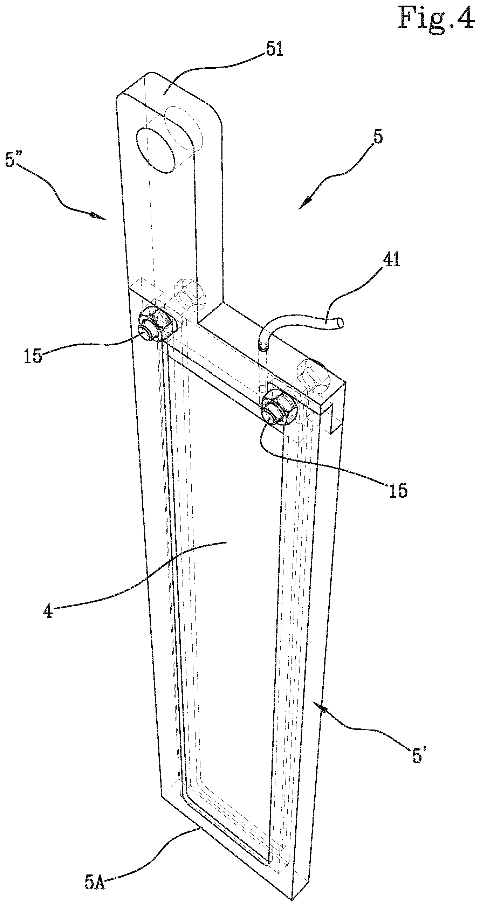

With reference to Figure 4, the frame 5 for supporting the cathode sponge 4 is composed and divisible into two parts designed to be removably and mutually fixed: a first and a second part 5' and 5".

The first part 5', positioned above and facing towards the outside of the body 2, is associated with the cathode sponge 4 and has a gripping hole 51 for the user. It rests laterally on the edges of a slot 71 formed centrally in the lid 7.

The first part 5' also has a channel for housing a cable 41 for electrical connection to the anode 4.

The second part 5", designed to be contained substantially entirely inside the cylindrical body 2, acts as a base for the sponge 4 and rests its lowest surface 5A on two brackets 25 symmetrically formed inside the body 2 (the brackets 25 are illustrated with dashed lines in Figure 2).

In the variant embodiment described here, the end portions of the parts 5' and 5" can be associated with a male/female coupling and then fixed by means of screws 15.

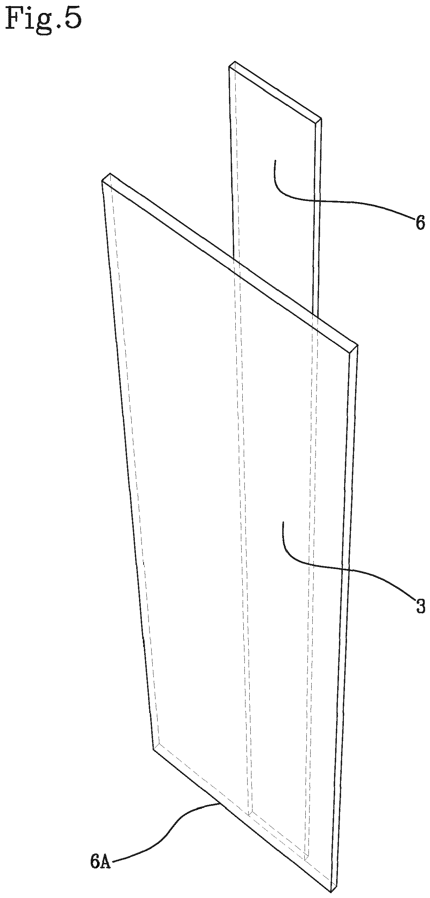

Each of the two anodes 3 is supported by an element 6 which in Figure 5 is shown connected to said cylindrical body 2.

The supporting elements 6 protrude from the lid 7, in which they engage a lateral portion by means of the compartments 72 and also rest their lower surface 6A on the brackets 25.

In use, the containment tank for the electrolytic solution has a magnetic drive pump which continuously feeds the liquid solution towards the inside of the cylindrical body 2 where the electrolytic process occurs which gradually allows the deposit of the metal present in the form of ions in the solution on the cathode sponge 4.

The device 1 is connected to a control unit which makes it possible to set the operating parameters.

At the start, the deposit of the metal is faster and then as the sponge 4 fills it gradually slows down.

When the cycle is finished, the operator extracts the sponge by taking apart the frame 5 and pulls out of the body 2 the part 5' by means of the hole 51.

The metal deposited on the sponge 4 is thus collected and passed to a suitable recovery cycle and the same sponge 4 is re-introduced into the cylindrical body 2 coupling and fixing again the parts 5' and 5".

The part 5" and the supporting elements 6 for the anodes 3 are also extractable, which is very useful in the event of a fault or maintenance of the device.

From the above description it may be seen how the invention achieves the preset purpose and aims and in particular it should be noted that a device is made for recovering metallic materials which, due to its dimensions and the purchase and maintenance costs, can easily be used in a goldsmith-silversmith production company.

In particular, the production of the extractable cathode sponge speeds up the collection of recovery metals, allowing the device to be also used by unskilled persons.

Another advantage of the invention is due to the fact that the device for recovering metallic materials made in this way prevents the jewellery manufacturers who decide to use it in their facilities from using specialised external firms for recovering precious metals from processing waste, saving considerably on recovery costs and managing independently the step of recovering precious metals.

Moreover, another advantage of the invention is that it provides a production cycle which can also comprise the step of recovering precious metals, increasing the effectiveness and reducing the costs of the cycle.

Lastly, the use of means which are normally available on the market and the use of commonly used materials make the device economically advantageous also in terms of construction.

In practice, the materials used, as well as the dimensions, may be of any type, depending on requirements, provided that they are consistent with their production purposes.

## Claims

1. A device (1) for recovering metallic materials comprising
at least one anode member (3) and
at least one cathode sponge (4) for collecting the metal deposited, both contained in a cylindrical containment body (2) and both designed to be at least partly immersed in successive portions of an electrolytic solution;
said cathode sponge (4) being extractable from said cylindrical body (2);
the device (1) also comprising infeed means (21, 22) for feeding said cylindrical body (2) and outfeed means (24) for the excess solution;
**characterized in that**
the device comprises a frame (5) for supporting said cathode sponge (4) designed to be securely connected to said cylindrical body (2) in a removable fashion, wherein
said frame (5) is divisible and modular in two parts (5', 5") which are removably fixable to each other: a first part (5'), to which said cathode sponge (4) is associated, having user gripping means (51) designed to be external relative to the inside of said cylindrical body (2) and a second part (5") designed to be entirely contained inside said cylindrical body (2).

2. The device according to the preceding claim, wherein said infeed means (21, 22) comprise a tubular element (21) for communication, for a first end (21A), with the lower end part (2A) of said cylindrical body (2) and having, at the other end (21B), an infeed opening (22) for said successive portions of the electrolytic solution positioned at the upper end part (2B) of said cylindrical body (2).

3. The device according to any one of the preceding claims, comprising a supporting element (6) for said at least one anode member (3) designed to be securely connected to said cylindrical body (2).

4. The device according to any one of the preceding claim, comprising a lid (7) for said cylindrical body (2) comprising at least one slot (71) for engaging a middle portion of said frame (5) and at least one compartment (72) for housing said supporting element (6).

5. The device according to the preceding claim, wherein said cylindrical body (2) comprises:
at least contact means (25) for the lower surfaces (5A, 6A) of said frame (5) and of said supporting element (6), respectively.

6. A system for recovering metallic materials comprising:
a containment tank for an electrolytic solution;
a device (1), according to any one of the preceding claims, which can be associated with said tank and designed to be at least partly immersed in said electrolytic solution;
feed means, connected to said tank, for said device (1), in such a way that successive portions of said electrolytic solution are introduced into a cylindrical body (2) of said device (1).

7. A kit for recovering metallic materials comprising a device (1) according to any one of the claims 1-5 and feed means for said device (1), in such a way that said feed means introduce successive portions of an electrolytic solution inside a cylindrical body (2) of said device (1).

## Patentansprüche

1. Vorrichtung (1) zur Wiedergewinnung von metallischen Materialien, umfassend:
mindestens ein Anodenelement (3) und
mindestens einen Kathodenschwamm (4) zum Aufnehmen des abgelagerten Metalls,
die beide in einem zylindrischen Enthaltegehäuse (2) enthalten und beide ausgestaltet sind, um zumindest teilweise in aufeinanderfolgenden Abschnitten einer Elektrolytlösung eingetaucht zu sein,
wobei der Kathodenschwamm (4) aus dem zylindrischen Gehäuse (2) herausziehbar ist,
wobei die Vorrichtung (1) zudem Einlaufmittel (21, 22) umfasst, um das zylindrische Gehäuse (2) zu beschicken, und Auslaufmittel (24) für die überschüssige Lösung,
**dadurch gekennzeichnet, dass**
die Vorrichtung einen Rahmen (5) zum Stützen des Kathodenschwamms (4) umfasst, der ausgestaltet ist, um sicher mit dem zylindrischen Gehäuse (2) auf entfernbare Weise verbunden zu sein, wobei der Rahmen (5) in zwei Teile (5', 5") trennbar und modular ist, die entfernbar miteinander fixierbar sind: einen ersten Teil (5'), mit dem der Kathodenschwamm (4) assoziiert ist, aufweisend Nutzergreifmittel (51), ausgestaltet, um relativ zur Innenseite des zylindrischen Gehäuses (2) extern zu sein, und einen zweiten Teil (5"), der ausgestaltet ist, um vollständig im zylindrischen Gehäuse (2) enthalten zu sein.

2. Vorrichtung nach dem vorhergehenden Anspruch, wobei die Einlaufmittel (21, 22) ein rohrförmiges Element (21) für die Kommunikation für ein erstes Ende (21A) mit dem unteren Endteil (2A) des zylindrischen Gehäuses (2) umfassen und am anderen Ende (21B) eine Einlauföffnung (22) für die aufeinanderfolgenden Abschnitte der Elektrolytlösung aufweisen, die am oberen Endteil (28) des zylindrischen Gehäuses (2) positioniert ist.

3. Vorrichtung nach einem der vorhergehenden Ansprüche, umfassend ein Stützelement (6) für das mindestens eine Anodenelement (3), das ausgestaltet ist, um sicher mit dem zylindrischen Gehäuse (2) verbunden zu sein.

4. Vorrichtung nach einem der vorhergehenden Ansprüche, umfassend einen Deckel (7) für das zylindrische Gehäuse (2), umfassend mindestens eine Aussparung (71), um mit einem mittleren Abschnitt des Rahmens (5) in Eingriff zu gelangen, und mindestens eine Unterteilung (72) zur Aufnahme des Stützelements (6).

5. Vorrichtung nach dem vorhergehenden Anspruch, wobei das zylindrische Gehäuse (2) Folgendes umfasst:
mindestens Kontaktmittel (25) für die unteren Oberflächen (5A, 6A) jeweils des Rahmens (5) und des Stützelements (6).

6. System zur Wiedergewinnung von metallischen Materialien, umfassend:
einen Enthaltetank für eine Elektrolytlösung;
eine Vorrichtung (1) nach einem der vorhergehenden Ansprüche, die mit dem Tank assoziiert werden kann und ausgestaltet ist, um mindestens teilweise in die Elektrolytlösung eingetaucht zu sein;
Beschickungsmittel für die Vorrichtung (1), die mit dem Tank verbunden sind, sodass die aufeinanderfolgenden Abschnitte der Elektrolytlösung in ein zylindrisches Gehäuse (2) der Vorrichtung (1) eingespeist werden.

7. Bausatz zur Wiedergewinnung von metallischen Materialien, umfassend eine Vorrichtung (1) nach einem der Ansprüche 1-5 und Beschickungsmittel für die Vorrichtung (1), sodass die Beschickungsmittel aufeinanderfolgende Abschnitte einer Elektrolytlösung in das zylindrische Gehäuse (2) der Vorrichtung (1) einspeisen.

## Revendications

1. Dispositif (1) pour la récupération de matériaux métalliques, comprenant :
au moins un élément anodique (3) et
au moins une éponge cathodique (4) pour recueillir le métal déposé,
tous deux contenus dans un corps de confinement cylindrique (2) et tous deux conçus pour être au moins partiellement immergés dans des portions successives d'une solution électrolytique ;
ladite éponge cathodique (4) étant extractible du corps cylindrique (2) ;
le dispositif (1) comprenant également des moyens d'entrée (21, 22) pour alimenter ledit corps cylindrique (2) et des moyens d'évacuation (24) pour la solution excédentaire ;
**caractérisé en ce que**
le dispositif comprend un cadre (5) destiné à supporter ladite éponge cathodique (4) conçue pour être solidement reliée audit corps cylindrique (2) de manière amovible, ledit cadre (5) étant divisible et modulaire en deux parties (5', 5") qui peuvent être fixées de manière amovible l'une à l'autre : une première partie (5'), à laquelle ladite éponge cathodique (4) est associée, ayant des moyens de préhension par l'utilisateur (51) conçus pour être extérieurs par rapport à l'intérieur dudit corps cylindrique (2) et une seconde partie (5") conçue pour être entièrement contenue à l'intérieur dudit corps cylindrique (2).

2. Dispositif selon la revendication précédente, dans lequel lesdits moyens d'entrée (21, 22) comprennent un élément tubulaire (21) pour la communication, pour une première extrémité (21A), avec la partie terminale inférieure (2A) dudit corps cylindrique (2) et présentant, à l'autre extrémité (21B), une ouverture d'entrée (22) pour lesdites portions successives de la solution électrolytique positionnées au niveau de la partie terminale supérieure (28) dudit corps cylindrique (2) .

3. Dispositif selon l'une quelconque des revendications précédentes, comprenant un élément de support (6) pour ledit au moins un élément anodique (3) conçu pour être solidement relié audit corps cylindrique (2).

4. Dispositif selon l'une quelconque des revendications précédentes, comprenant un couvercle (7) pour ledit corps cylindrique (2) comprenant au moins une fente (71) pour engager une partie centrale dudit cadre (5) et au moins un compartiment (72) pour loger ledit élément de support (6).

5. Dispositif selon la revendication précédente, dans lequel ledit corps cylindrique (2) comprend :
au moins des moyens de contact (25) pour les surfaces inférieures (5A, 6A) dudit cadre (5) et dudit élément de support (6), respectivement.

6. Système de récupération de matériaux métalliques, comprenant :
un réservoir de confinement pour une solution électrolytique ;
un dispositif (1), selon l'une quelconque des revendications précédentes, pouvant être associé audit réservoir et conçu pour être au moins partiellement immergé dans ladite solution électrolytique ;
des moyens d'alimentation, reliés audit réservoir, pour ledit dispositif (1), de manière à ce que des portions successives de ladite solution électrolytique soient introduites dans un corps cylindrique (2) dudit dispositif (1).

7. Kit de récupération de matériaux métalliques, comprenant un dispositif (1) selon l'une quelconque des revendications 1-5 et des moyens d'alimentation dudit dispositif (1), de telle sorte que ces moyens d'alimentation introduisent des portions successives d'une solution électrolytique à l'intérieur d'un corps cylindrique (2) dudit dispositif (1).
